# EUROPEAN PATENT APPLICATION

(11) **EP 1 959 202 A2**
(43) Date of publication of application: **20.08.2008**
(21) Application number: 08001502.7
(22) Date of filing: 28.01.2008
(51) Int. Cl.: F24D 19/10

(54) **Thermostatic control device for radiator valves**

(30) Priority: 13.02.2007 IT MI20070265
(71) Applicant: Far Rubinetterie S.P.A., 28024 Gozzano (NO) (IT)
(72) Inventor: Allesina, Guerrino, 28024 Gozzano Novara (IT)
(74) Representative: Coloberti, Luigi

(57) **Abstract**

A thermostatic control device for controlling radiator valves (10). The device comprises a support body (15) having elastically yielding clamping members (18) to engage with the body (12) of the valve (10), by a locking ring (27) axially slidable pivotingly locking ring (27) rotatably supported by the body (15) of the device. A control knob (31), screwably engaged by the support body (15), houses a thermostatic actuator (35) for a closing member of the valve. The control knob (31) and the locking ring (27) comprise engageable and disengageable hooking means (29, 38) for selectively locking the rotation of the control knob (31) in a plurality of angular positions, by the simple rotation of the locking ring (27).

## Description

### BACKGROUND OF THE INVENTION

This invention refers to a settable thermostatic control device for regulating and operating radiator valves for heating systems, and in particular relates to a manually operable thermostatic control head for flow control valves of the aforementioned type.

### STATE OF THE ART

In heating systems for civil and/or industrial buildings, it is necessary to make use of appropriate thermostatic devices for controlling and regulating the room temperature, which can be fitted onto the radiator elements of the heating system. To this purpose, it is well-known that the temperature of an environment depends on the presence of radiator elements, and can be affected by natural or other types of external heat sources.

In modern heating systems, in order to obtain an adequate comfort and an appropriate differentiated control of the temperature in the various environments, in relation to different requirements of users, it is necessary to provide the individual radiator elements with thermostatically actuated valves suitable for controlling the circulation of the thermal fluid and for automatically regulating the temperature of the body of the radiator, also enabling an user to change and/or preset the heating temperature at a pre-established value.

In this connection, the flow control valves are usually provided with a thermostatic control device, sensitive to the room temperature, which is capable of operating a valve closing device, for adjusting the flow of the thermal fluid which is made to circulate in a heating plant.

Usually, a thermostatic head comprises a body for supporting a rotatable knob housing an extensible thermostatic actuator sensitive to the room temperature; the thermostatic actuator is operatively connected to a control rod of a plug or closing member of the radiator valve and, as the room temperature varies, the thermostatic actuator axially extends or reduces its length, consequently varying the open and closed conditions of the flow control valve. By manually operating and rotating a control knob in one or in an opposite direction with respect to the support body, a user can change and regulate the operative temperature at will, and consequently the heating temperature of the environment.

Thermostatic heads or devices of this type are described for example in US-A-4.089.461, US-A-4.290.553, EP-A-32112 and EP-A-1.359.489.

One of the problems inherent in the known type of thermostatic heads consists in the difficulty of adjusting and locking the thermostatic head in the adjusted operative conditions appropriately selectable by the user, due to the complexity of the control system.

In general, this is achieved by locking the rotation of the knob by variously conformed locking devices, which functionally and structurally complicate the thermostatic head itself, thereby making this operation somewhat difficult to carry out.

A second problem, resulting from the previous one, concerns the need to provide the thermostatic head with anti-tampering means for preventing any tampering of the thermostatic head which is liable to jeopardise its correct working.

### OBJECTS OF THE INVENTION

The main object of this invention is to provide a thermostatically actuated control device for radiator valves or for heating elements, by means of which it is possible to obviate the aforementioned drawbacks.

A particular object of the invention is to provide a thermostatically actuated valve control device for controlling the circulation of a thermal fluid in radiators, whereby it is possible to automatically regulate opening and closing conditions of the control valve, in relation to a room heating temperature, to maintain the same heating temperature at a substantially constant value, and to selectively adjust the required temperature by a solution structurally simple and easy to be set by an user, and at the same time preventing any risk of tampering with the thermostatic device itself.

A further object of the invention is to provide a thermostatic device of the aforementioned kind, conformed to allow a quick coupling to a valve, and to stop the rotation of a control knob by easily operating a single locking device.

### BRIEF DESCRIPTION OF THE INVENTION

These and further objects of the invention can be achieved by a thermostatic control device for radiator valves and the like, according to claim 1.

In particular, according to the invention, a thermostatic device has been provided, for a radiator valve having a valve body and an axially movable closing member, the thermostatic device comprising:
a cup-shaped support body having a peripheral wall, and a bottom wall provided with elastically yieldable clamping members conformed to bent and to engage with the valve body;
an axially movable locking ring for bending and engaging said clamping members with the valve body;
a control knob screwably engaged with the support body of the thermostatic device; and
a thermostatic actuator inside the control knob, the thermostatic actuator having an axially movable rod operatively connected to the closing device of the radiator valve,
characterised in that the locking ring is rotatably supported by the cup-shaped body of the control device; and
in that the control knob and the locking ring comprise engageable and disengageable hooking means to lock the rotation of the control knob,
said hooking means comprising an elastically flexible hooking member selectively engageable with and disengageable from angularly spaced apart retaining elements on the control knob, and cam means on the support body to engage and disengage the hooking member upon angular rotation of the locking ring.

### BRIEF DESCRIPTION OF THE DRAWINGS

These and further characteristics and objects of the thermostatic control device according to the invention, will be more clearly evident from the following description of one of its preferential embodiments, and from the drawings, in which:
Figure 1 shows a radiator valve provided with a thermostatic control device according to the invention;
Figure 2 shows a perspective view of the thermostatic device;
Figure 3 shows an exploded view of the thermostatic device;
Figure 4 shows a longitudinal cross-sectional view of the control knob;
Figure 5 shows a longitudinal cross-sectional view of the support body, along the line 5-5 of figure 6;
Figure 6 shows a top view of the support body, along the line 6-6 of figure 5;
Figure 7 shows a longitudinal cross-sectional view of the locking ring;
Figure 8 shows a longitudinal cross-sectional view of the thermostatic control device, in an assembled condition;
Figure 9 shows a cross-sectional view along the line 9-9 of figure 8, with the knob free to rotate;
Figure 10 shows a cross-sectional view also along the line 9-9 of figure 8, with the knob in a locked condition;
Figure 11 shows stop means preventing the knob from becoming completely unscrewed and removed from the support body of the control device.

### DETAILED DESCRIPTION OF THE INVENTION

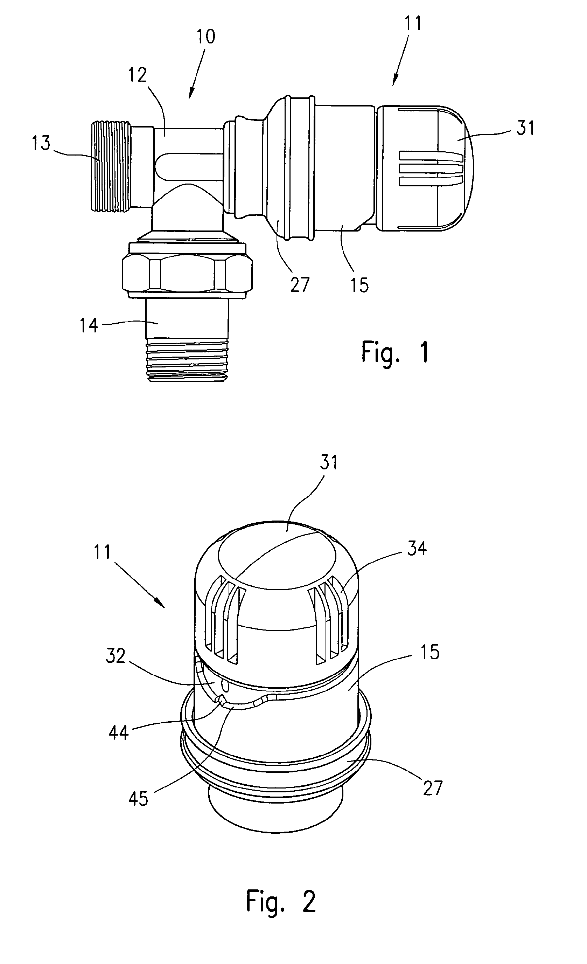

Figure 1 shows a valve 10 for regulating the flow of a thermal fluid fed to a radiator or similar heating element, while reference number 11 indicates an automatic thermostatic control device for controlling the valve 10.

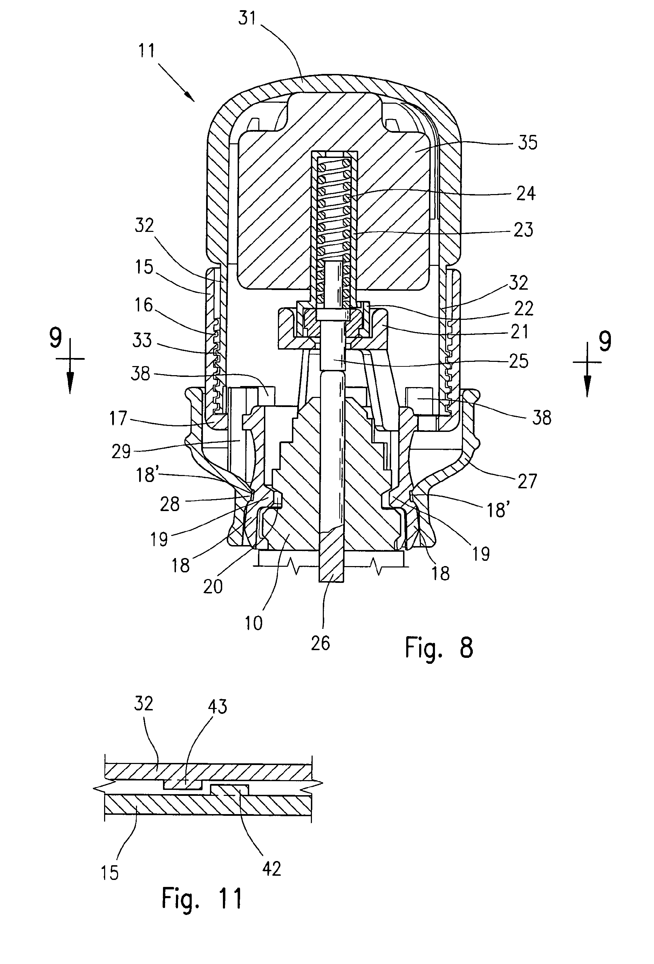

The valve 10 comprises a body 12 having an inlet 13 for the fluid, axially aligned with the thermostatic device 11, and a lateral outlet 14. The valve 10, in a per se known way, for example as shown in US 4.089.461 comprises a plug or similar flow closing member, thrust by a spring to close against a seat inside the body 12; the plug has a stem 26, figure 8, that axially extends towards the thermostatic device 11, operatively connected to the latter to move the plug or closing member in respect to the valve seat, depending on the room temperature sensed by a thermostatic actuator inside the control device 11.

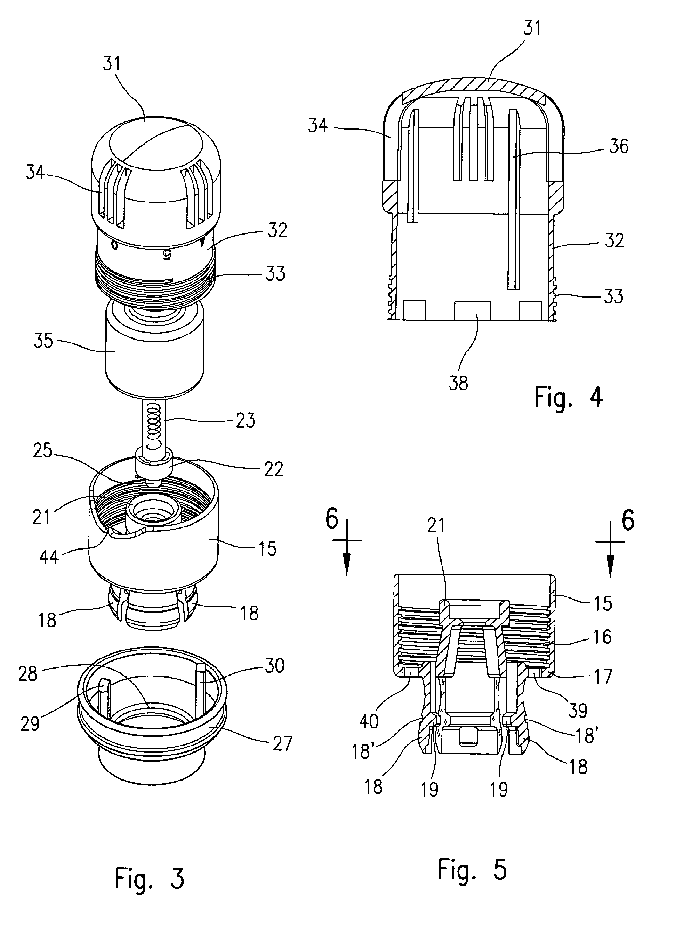

As shown in figures 2 and 5, and in the exploded view of figure 3, the thermostatic device 11 comprises a cup-shaped support body 15 having a peripheral wall 16 provided with an internal screw thread, for example a multi-start screw thread, and a bottom wall 17 having a central aperture for the passage of a control member for the valve 10, as explained further on.

The support body 15, in correspondence with the central aperture in the bottom wall 17, extends with four elastically yieldable clamping members 18 conformed to engage the body 12 of the valve 10; each clamping member 18 is provided with an internal rib or teeth 19 to engage a circumferential groove 20 in the valve body 12, as shown in figure 8.

The support body 15 also comprises a seat 21 for housing the head 22 of a cylindrical sleeve 23 for housing a counter spring 24 acting on a sliding rod 25 axially aligned with the stem 26 of the plug of the valve 10, as shown in figure 8.

The thermostatic device 11 also comprises a movable locking ring 27 axially slidable and rotatably supported by the body 15 of the control device 11.

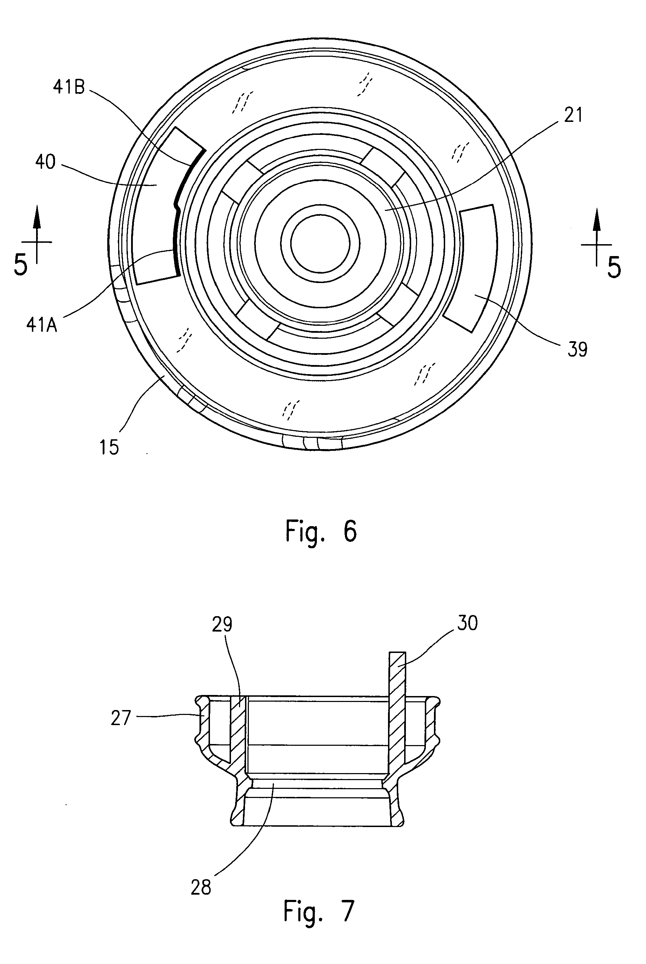

The locking ring 27, in correspondence with the tooth 19 of the clamping members 18, is provided with an annular ribbing 28, figures 7 and 8 which, following a forward sliding movement of the ring 27, inwardly bends the clamping members 18 to engage the tooth 19 into the groove 20 of the valve body 15; the annular ribbing 28 in turn penetrates into side slots 18' of the clamping members 18 to prevent disengagement.

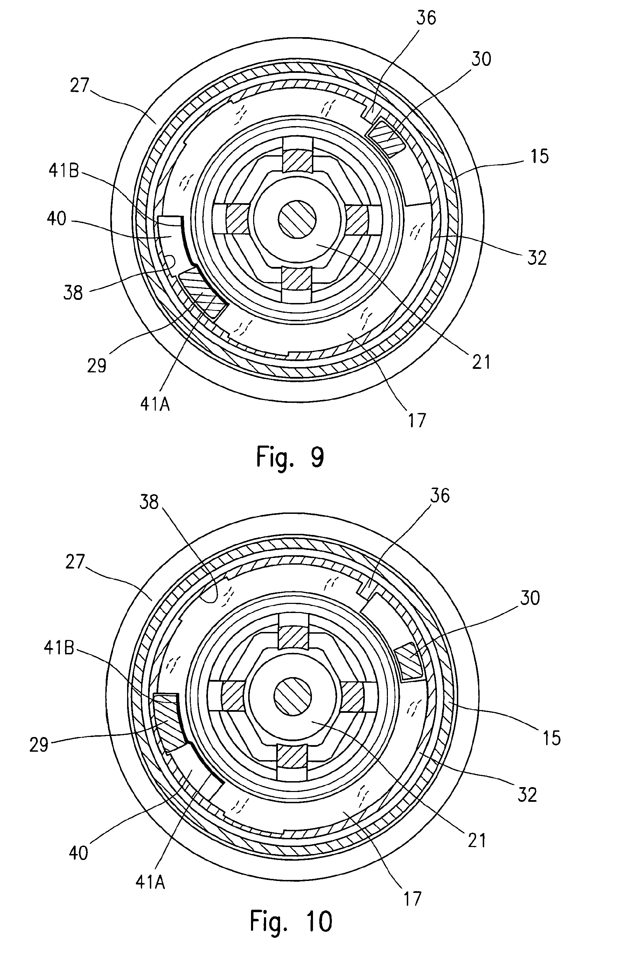

The locking ring 27 and a control knob 31, as shown in figures 3 and 7, are provided with engageable and disengageable retaining means to selectively lock the rotation of the knob 31 in a plurality of angularly spaced apart stop positions; in the example shown, the stop means comprises a bar-shaped and elastically flexible hooking member 29 on the ring 27, and retaining elements or recessed portions 39 on the control knob 31, as will be explained further on; a stop member 30 is provided on the same locking ring 27 for stopping the rotation of the knob 31 preventing it from being completely unscrewed; once again, the stop member 30 is in the form of a bar which extends parallely to and on the opposite side of the hooking member 29, to partially protrude from the rear edge of the locking ring 27, as shown in figure 3, to engage with an internal rib 36 of the knob 31, as shown in figure 9.

The control knob 31, as shown in the various figures, is provided with a cylindrical wall portion 32 having an external screw thread 33 designed to be screwed into the internal screw thread 16 of the cylindrical wall portion of the support body 15 of the control device 11; slits 34 enable the passage of air from the environment towards the inside of the knob 31.

A per se known thermostatic actuator 35, for example of wax type or other type is housed inside the knob 31; the thermostatic actuator 35 is capable of varying its volume, that is to say of axially extending and retracting as the room temperature changes, to push the sleeve 23 with the pin 25 against the stem 26 of the plug member of the valve 10, or to allow it to move backwards.

The knob 31 in turn comprises an internal rib 36 which longitudinally extends parallel to the stop member 30 of the locking ring 27, the rib 36 being capable to rest against the stop member 30 to stop the rotation of the knob 31, preventing it from being completely unscrewed.

The knob 31, inside its front edge, is provided with a plurality of recesses 38, or angularly spaced apart retaining elements designed to be selectively engaged and disengaged by the hooking member 29 of the ring 27, by an angular rotation of the same knob.

In this connection, the bottom wall 17 of the body 15 is provided in opposite positions with two arched slots 39 and 40 for the passage of the hooking and stop members 29 and 30 to protrude inside the locking ring 27; the arch shaped slots 39 and 40 are provided in order to allow the angular rotation of the locking ring 27, for releasing and, respectively, locking the rotation of the knob 31.

In particular, the slot 40 for the hooking member 29 has its internal edge provided with cam means comprising a first radially backward cam portion 41A, and a second cam portion 41B radially advanced with respect to the cam portion 41A; the cam portions 41A, 41B of the slot 40, performs the function of laterally bending the hooking member 29, allowing the same hooking member 29 to engage and, respectively, disengage from a recess 38 of the knob 31 that has been selectively positioned, by rotation of the same knob 31, in relation to a desired operative temperature of the thermostatic control device 11.

The foregoing is more clearly explained by figures 9 and 10; more precisely, figure 9 shows the disengaged condition of the hooking member 29 when the locking ring 27 is rotated to present the backward cam portion 41A of the slot 40 in correspondence with the aforesaid hooking member 29. In this condition, the knob 31 is disengaged and is free to rotate.

Conversely, figure 10 shows a locked condition of the knob 31, following a rotation of the locking ring 27.

In this condition, the radially advanced cam portion 41B of the slot 40 pushes the elastic hooking member 29 into a recess 38 of the knob 31 which at that given moment is radially aligned to the hooking member 29, depending on the rotation of the same knob 31; in each of its variously selectable angular positions of recesses 38, the rotation of the knob 31 is therefore prevented.

Lastly, figure 11 schematically shows a second solution of the means for stopping the rotation of the knob 31, preventing it from being unscrewed completely and disengaged from the support body 15.

According to this solution, the wall 32 of the knob 31 is provided with an internal tooth or protrusion 43 to engage with a similar external tooth or protrusion 42 on the support body 15.

The thermostatic device 11 is completed by a scale 0 and by an index 44 for selectable temperatures correlated to the positions of the recesses 38, to provide a visual indication of a preset temperature. In particular the knob 31 is provided on the outer surface of cylindrical wall 32 with a circumferential temperature scale 0, while the peripheral wall of the body 15 is provided with a reference index 44 in correspondence with a recess 45 or a lateral window on the peripheral edge.

From what has been described and shown in the accompanying drawings, it will be evident therefore that a structurally simple thermostatic control device for radiator valves has been provided, in which, by means of two simple movements of a locking ring, one in the axial and the other one or rotational direction, it is possible to clamp the thermostatic device to the valve body and, respectively, lock the rotation of the knob, selectively in several pre-established angular positions, each of which corresponds to a preset room temperature, for controlling and partially or totally closing the radiator valve.

It is understood that what has been described and shown in the accompanying drawings has been given purely by way of example in order to illustrate the general features of the invention and a preferential embodiment of the thermostatic device.

In particular, it is pointed out that the various parts of the thermostatic device, such as the body 15, the locking ring 27 and the knob 31 can be manufactured and moulded from any suitable plastic material, either of a same or of different types, provided they are suitable for the intended use.

Therefore, other modifications and/or variations may be made to the device in its entirety, and to one or more component parts, without thereby departing from the claims.

## Claims

1. Thermostatic device (11) for a radiator valve (10) having a valve body (12) and an axially movable closing member, the thermostatic device (11) comprising:
a cup-shaped support body (15) having a peripheral wall (16), and a bottom wall (17) provided with elastically yieldable clamping members (18) conformed to bent and to engage with the valve body (12);
an axially movable locking ring (27) for bending and engaging said clamping members (18) with the valve body (12);
a control knob (31) screwably engaged with the support body (15) of the thermostatic device (11); and
a thermostatic actuator (35) inside the control knob (11), the thermostatic actuator (35) having an axially movable rod (25) operatively connected to the closing device of the radiator valve (10),
**characterised in that** the locking ring (27) is rotatably supported by the cup-shaped body (15) of the control device; and
**in that** the control knob (31) and the locking ring (27) comprise engageable and disengageable hooking means (29, 38) to lock the rotation of the control knob (31),
said hooking means (29, 38) comprising an elastically flexible hooking member (29) selectively engageable with and disengageable from angularly spaced apart retaining elements (38) on the control knob (31), and cam means (41A, 41B) on the support body (15) to engage and disengage the hooking member (29) upon angular rotation of the locking ring (27).

2. The thermostatic device according to claim 1, **characterised in that** said hooking means (29, 38) comprise an elastically flexible hooking member (29) protruding into the locking ring (27), said hooking member (29) selectively engaging with a plurality of angularly spaced apart retaining elements (38) inside the control knob (31).

3. The thermostatic device according to claim 2, **characterised in that** said hooking member (29) is in the form of a bar-shaped member which extends parallel to a rotational axis of the locking ring (27).

4. The thermostatic device according to claim 2, **characterised in that** said retaining elements (38) are consisting in a plurality of recessed areas on an edge of the control knob (31).

5. The thermostatic device according to claim 1, **characterised by** comprising interengaging stop means (30, 36) on locking ring (27) and the control knob (31), to prevent the same control knob (31) from becoming completely unscrewed from the support body (15).

6. The thermostatic device according to claim 5, **characterised in that** the stop means comprises stop members (30, 36) parallely extending to a rotational axis of locking ring (27).

7. The thermostatic device according to claim 5, **characterised in that** the stop means comprises an internal protrusion (43) on the peripheral wall (32) of the knob (15), and an external protrusion (42) on the peripheral wall of the support body (15).

8. The thermostatic device according to claim 1, **characterised by** comprising a scale (0) for settable temperatures on the control knob (31), and a reference index (44) on the support body (15).

9. A thermostatic control unit for controlling a radiator valve (10), in which the valve (10) comprises a body (12) having a seating for an axially movable closing member, **characterised by** comprising:
a cup-shaped support body (15), having peripheral and bottom walls provided with a central aperture, at least one arch shaped slot (10) coaxially arranged to said central aperture, and a plurality of clamping members (18) for the valve body (12), which extend from the bottom wall of the support body (15);
a control knob (31) screwably engaged with the cup-shaped support body (15);
a thermostatic actuator (35) inside the control knob (31), said thermostatic actuator (35) being operatively connected to the closing member of the radiator valve;
a locking ring (27) axially movable and rotatably supported with respect to a longitudinal axis of the support body (15);
said locking ring (27) comprising an annular rib (28), engageable with said clamping members (18) upon an axial movement of the locking ring (27);
the locking ring (27) comprising a hooking member in the form of an elastically flexible bar-shaped element (29) which extends parallel to a longitudinal axis of the support body (15), said bar-shaped element (29) extending through said arch-shaped slot (40) in the bottom wall of the support body (15);
a plurality of angularly spaced apart retaining elements (38) inside a peripheral wall (32) of the control knob (31), said retaining elements (38) being selectively engageable by said hooking member (29); and
cam means (41A, 41B) on an edge of said arch-shaped slot (40), to selectively engage said hooking member (29) with the retaining elements (38) of the control knob (31), upon rotation of the locking ring (27).
